# EUROPÄISCHE PATENTANMELDUNG

(11) **EP 2 783 982 A1**
(43) Veröffentlichungstag der Anmeldung: **01.10.2014**
(21) Anmeldenummer: 14001103.2
(22) Anmeldetag: 26.03.2014
(51) Int. Cl.: B64D 9/00, B60P 7/08, B61D 45/00

(54) **Container- Befestigung**

(30) Priorität: 27.03.2013 DE 102013005247
(71) Anmelder: Quickloading GmbH, 85640 Putzbrunn (DE)
(72) Erfinder: Die Erfindernennung liegt noch nicht vor

(57) **Zusammenfassung**

Die vorliegende Erfindung betrifft Container- Befestigungen, die unerwünschte Bewegungen der Container während des Transports verhindern sollen. Dies wird im Prinzip durch eine vorgespannte Reibungsverbindung zwischen Container **10** oder Palette und ortsfestem Widerlager **30** erreicht, wodurch Relativbewegungen des Containers **10** oder Palette im Ladesystem **20** verhindert werden. Unter das zu beiden Seiten des Containers **10** verlaufende Widerlager **30** werden seitlich am Container **10** schwenkbar gelagerte Leisten **40** geschoben, die über Kniehebel **41/42** betätigt gegen das Widerlager **30** in Reibungsverbindung gedrückt und gehalten werden.

Durch diese Maßnahmen reduzieren sich deutlich die Krafteinwirkungen auf Container **10** bzw. Palette, Schienensystem und den Befestigungen im Laderaum. Die im herkömmlichen Ladesystem integrierten Riegel werden nicht mehr benötigt.

## Beschreibung

### Stand der Technik

Im Transportwesen haben sich Container unterschiedlicher Bauarten in vielfältigen Anwendungsbereichen für Stück- und Schüttgut durchgesetzt. Stapelbare Großcontainer fixieren sich übereinander selbst durch entsprechende integrierte Aufnahmeelemente. Nur in einer Ebene verschieb- oder rollbare Container und ebenso Paletten aus Metall und / oder Kunststoff müssen gegenüber ihrer Auflage festgelegt werden. Dies geschieht durch externe oder ein- bzw. angebaute Feststellmittel.

So haben z.B. Container und Paletten an ihrem Boden Leisten, die unter ein Schienensystem im Laderaum über Laufrollen geschoben bzw. gefahren werden (DE 10 2008 038 637 A1; ISO/PAS 21100:2011(E); IATA ULD Technical Manual UTM 50/1, Pallet for NAS 3610 Class II restraint systems). Diese Leisten haben einen geringen, etwa 1-2 cm, Abstand zu dem darüber und seitlich liegenden Schienensystem. Der Container bzw. die Palette wird mittig auf der Vorderseite durch einem im Ladesystem integrierten Riegel, der nach Positionierung des Containers nach oben geklappt wird, an der Vorwärts- und der Rückwärtsbewegung gehindert. Der Container hat durch diese Art der Befestigung zu allen Seiten ein mehr oder weniger großes Bewegungsspiel.

### Problemstellung

Die bekannte Befestigung hat sich im Grunde bewährt. Durch das gegebene Spiel im System können sich jedoch während des Transportes, insbesondere im Luftverkehr, durch in allen Richtungen auftretende Beschleunigungskräfte große Beanspruchungen und merkliche Bewegungen ergeben, wodurch Beschädigungen nicht auszuschließen sind.

Die Beschleunigungskräfte wirken in Vorwärts- bzw. Rückwärtsrichtung auf die Riegelanordnung, in Quer- und Hubrichtung auf die Leisten und damit auf die Schienen sowie auf die Laufrollen bei der Abwärtsbewegung. Schäden können besonders bei stoßartigen Bewegungen, insbesondere im Luftfahrtverkehr, auftreten.

Der Erfindung liegt daher die **Aufgabe** zugrunde, unerwünschte Bewegungen der Container während des Transports zu vermeiden.

### Lösung

Diese Aufgabe wird erfindungsgemäß mittels der beanspruchten Maßnahmen im Prinzip durch eine vorgespannte Reibungsverbindung zwischen Container oder Palette und ortsfestem Widerlager gelöst, wodurch Relativbewegungen des Containers oder Palette im Ladesystem verhindert werden. Unter das zu beiden Seiten des Containers verlaufende Widerlager werden seitlich am Container schwenkbar gelagerte Leisten geschoben, die über Kniehebel betätigt gegen das Widerlager in Reibungsverbindung gedrückt und gehalten werden. Dadurch reduzieren sich deutlich die Krafteinwirkungen auf Container bzw. Palette, Schienensystem und den Befestigungen im Laderaum. Die im herkömmlichen Ladesystem integrierten Riegel werden nicht mehr benötigt, ebenso wenig obere Klemmstützen.

Zur weiteren Ausgestaltung der Erfindung ist das Widerlager als Schiene ausgeführt und im Ladebereich über eine Schraubverbindung festgelegt.

Als zusätzliche Sicherung zur Vermeidung von Längsverschiebungen weist die Schiene Anschläge im Rasterabstand, bezogen auf die Länge der Leisten am Container, auf.

Die am Container schwenkbaren Leisten weisen an ihren Enden je eine Halteplatte mit einer Kurvenbahn auf. Auf dieser gleitet der Nocken eines Kniehebels, zum Aufbringen der Befestigungskraft, in eine Raststellung. Der Kniehebel ist am Container gelagert und enthält an seiner nockenabgewandten Seite einen Betätigungshebel.

In Folgendem wird die Erfindung an einem Beispiel aus der Luftfracht anhand der Zeichnungen näher erläutert.

Diese zeigen:
- **Figur 1:**: einen Container nach dem Stand der Technik,
- **Figur 2:**: einen Container mit der erfindungsgemäßen Befestigung, wobei der linke Teil den unbefestigten und der rechte Teil den befestigten Zustand darstellt,
- **Figur 3:**: die Seitenansichten von Figur 2,
- **Figur 4:**: die vergrößerte Darstellung der Befestigungselemente nach Figur 2,
- **Figur 5:**: Isometrische Darstellung der Befestigungselemente.

### Beschreibung des Ausführungsbeispiels

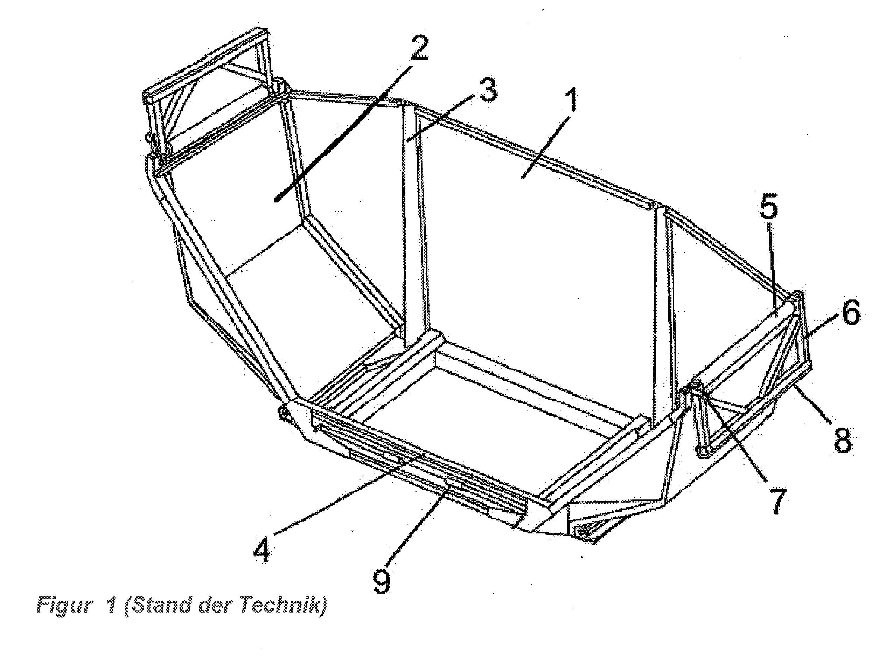

**Figur 1** Dieser bekannte Container (DE 10 2008 038 637 A1) hat Rollen in seinem Boden integriert und kann damit ohne ein Ladesystem im Laderaum bewegt werden. Der Container mit drei hinteren Wandelementen **1** und zwei seitlichen Wandelementen **2,** die an einem rahmenartigen Bodenelement **4** montiert ist. Die hinteren Wandelemente **1** sind über zwei im Wesentlichen vertikalen Streben **3** miteinander verbunden, die sich aus dem Eckbereich des Bodenelements **4** nach oben strecken. Die seitlichen Wandelemente **2** verlaufen entlang der Tiefe des Bodenelementes **4** und sind ungefähr auf der Hälfte der Höhe nach oben abgeknickt, wodurch sich eine seitliche Anpassung an den Flugzeugfrachtraum ergibt. An der oberen Kante ist an den Ecken der seitlichen Elemente **2** eine Ablenkung für eine Schwenkachse **5** vorgesehen, um die eine Klemmstütze **6** geschwenkt werden kann. An der Schwenkachse **5** ist eine Kniehebelanordnung **7** vorgesehen, mit der die Schwenkachse **5** senkrecht zur Ausrichtung bewegt werden kann. Die Klemmstützen **6** können damit angehoben werden und mit einem elastischen Anschlagelement **8,** welches vorzugsweise aus einem Elastomerpuffer besteht, gegen einen Teil eines Flugzeugfrachtraums geklemmt werden. An der Vorderseite des Bodenelementes **4** sind zwei Betätigungshebel **9** jeweils an einer Welle drehmomentübertragend befestigt.

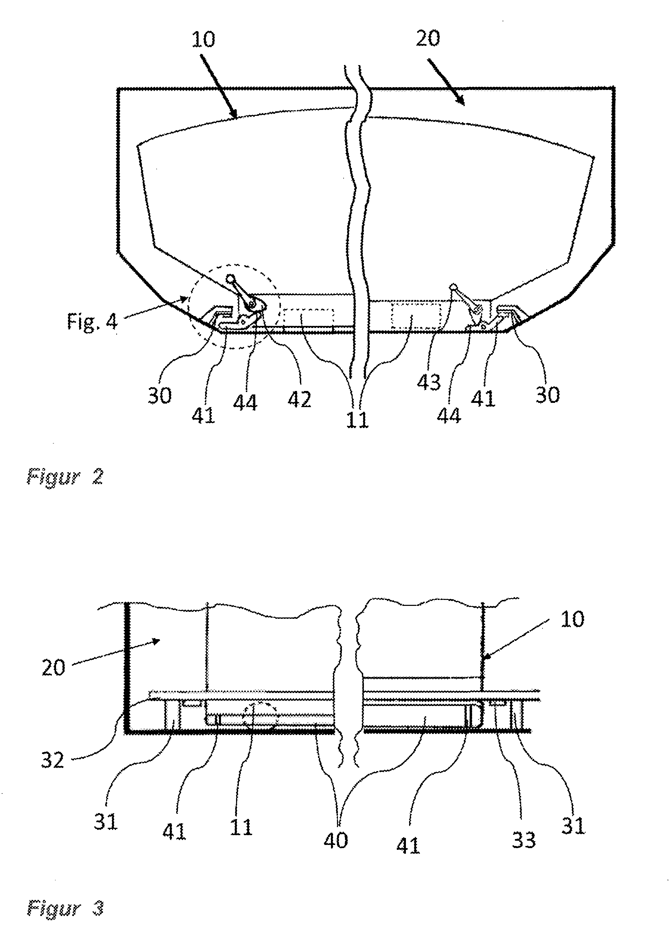

**Figur 2** zeigt einen Container **10** von vorne mit dem erfindungsgemäßen Befestigungssystem, wie er in einem Flugzeugladeraum **20** positioniert ist. Der Container **10** ist ähnlich dem bekannten gemäß Figur 1 aufgebaut, allerdings ohne die oberen, seitlichen Klemmstützen **6** mit ihrer Anbringung.
   Auf der linken Seite der Figur ist der Container **10** durch die ausgefahrenen Rollen **11** angehoben, und die Leiste **40** (s. Fig. 3 u. 5) ist frei beweglich. So kann der Container **10** mit seinen Leisten **40** unter das Widerlager **30** geschoben und so positioniert werden.
   Auf der rechten Seite der Figur sind die im Containerboden integrierten Rollen **11** eingezogen und der Container steht flächig auf dem Laderaumboden. Die drehbar gelagerte Halteplatte **41** weist eine Kurvenbahn **44** auf. Bei Betätigung des Hebels **43** drückt der Nocken **42** in seiner Bewegung über die Kurvenbahn **44** diese mit der Halteplatte **41** nach unten. Der Nocken **42** gelangt somit am Ende seiner Bewegung in eine definierte Raststellung als Wirkung der Betätigung des Kniehebels **41/42.** Durch die Bewegung der Halteplatte **41** wird diese mit ihrer verbundenen Leiste **40** nach oben an das Widerlager **30** zwischen den Anschlägen **33** in Reibungsverbindung gedrückt und gehalten. Damit ist die sichere Befestigung des Containers im Laderaum hergestellt.
**Figur 3** zeigt (vergrößert) um 90° gedreht den unteren Teil von Figur 2.
   Auf der linken Seite der Figur ist die noch nicht arretierte Leiste **40** unter dem Widerlager **30** zu sehen. Die rechte Seite der Figur zeigt wie sich nach der Betätigung über den Hebel **43** des Kniehebel **41**/**42** seine Halteplatte **41** mit ihrer Leiste **40** an das Widerlager **30** hinter dem Anschlag drückt.

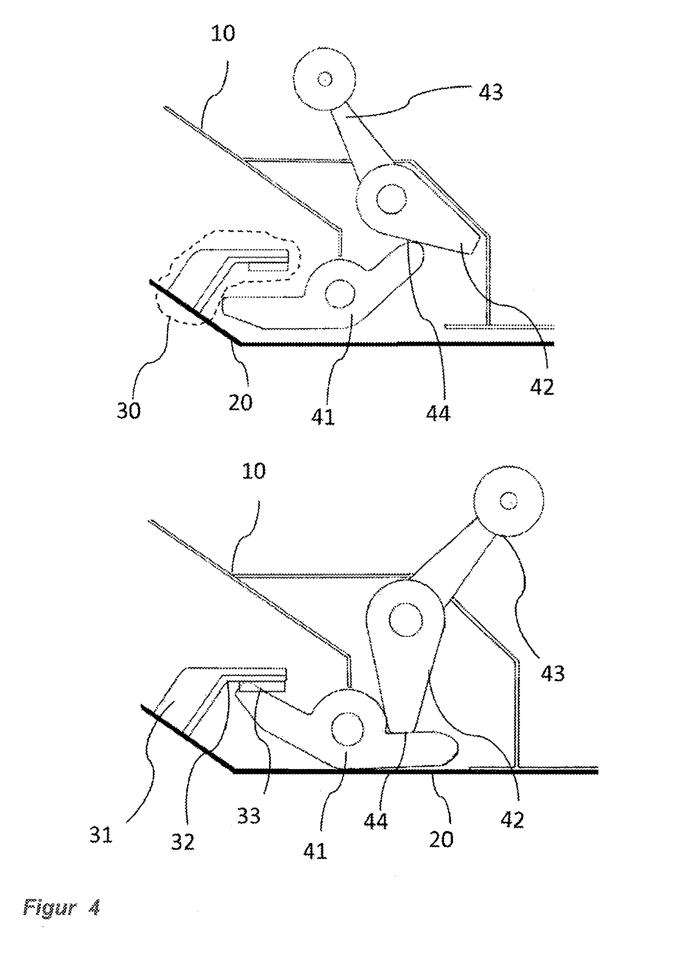

**Figur 4** zeigt im oberen Teil einen Ausschnitt aus Figur 2 als Detailseitenansicht der nicht betätigten, im Container **10** integrierten Befestigung. Der Nocken ist durch den Betätigungshebel **43** von der Halteplatte **41** weg gedreht. Die Halteplatte **41** bzw. Leiste **40** kann sich dadurch in einem gegebenen Spielraum bewegen. Das Widerlager **30,** bestehend aus Halter **31,** Schiene **32** und Anschlag **33,** ist in diesem Beispiel an dem Flugzeugladeraum **20** über die Halter **30** angebracht. Die Halteplatte **41** ist mit ihrer Leiste **40** frei zum Widerlager **30** verschiebbar.
   Im unteren Teil der Figur 4 ist der Container **10** auf dem Laderaumboden **20** abgestellt. Die Halteplatte **41** ist mit ihrer Leiste **40** an die Schiene **32** des Widerlagers **30** gedrückt. Durch den an der Leiste **32** angebrachte Anschläge **33** wird der Container **10** an einem Verrutschen in beide Längsrichtungen gehindert. Durch die Betätigung des Hebels **43** gelangt der Nocken **42** auf der Kurvenbahn **44** der Halteplatte **41** in die Raststellung (Kniehebelwirkung). Durch diese Bewegung wird die drehbar gelagerte Halteplatte **41** auf der Gegenseite gegen das ortsfeste Widerlager **30** zwischen den Anschlägen **33** gedrückt.

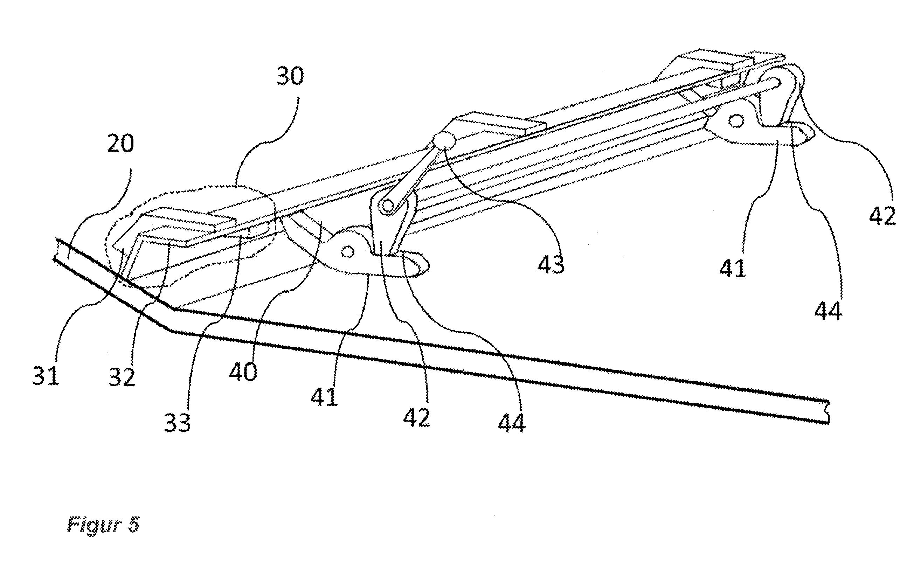

**Figur 5** zeigt die prinzipielle räumliche Anordnung mit betätigter Befestigung im Laderaum **20** ohne Container **10.** Durch die Drehbewegung des Hebels **43** befinden sich zwei über die Leiste **40** miteinander verbundene Nocken **42** auf der jeweiligen Halteplatte **41** in die Raststellung (Kienhebelwirkung).

## Patentansprüche

1. Container- Befestigung, insbesondere für Luftfracht, für Palette und oder Container **(10)** mit einem Boden und/oder einem Deckel mit gegenüber liegenden Leisten **(40),** von denen mindestens eine um ihre Längsachse schwenkbar über je eine Halteplatte **(41)** an ihren Endseiten am Boden und/oder Deckel gelagert ist, wobei mindestens eine der Halteplatten **(41)** über einen Nocken **(42)** betätigbar ist, in den als Teil eines Kniehebels **(41** u. **42)** die Befestigungskraft eingeleitet und dadurch die Leiste **(40)** nach oben gegen ein ortsfestes Widerlager **(30)** gedrückt und gehalten wird.

2. Container- Befestigung nach Anspruch1, **dadurch gekennzeichnet, dass** das Widerlager als Schiene **(32)** ausgeführt und im Ladebereich (20) über eine Schraubverbindung **(31)** festgelegt ist.

3. Container- Befestigung nach Anspruch 2, **dadurch gekennzeichnet, dass** an der Schiene **(32)** Anschläge **(33)** im Rasterabstand bezogen auf die Leistenlänge **(40)** angebracht sind.

4. Container- Befestigung nach Anspruch 1, **dadurch gekennzeichnet, dass** die Halteplatten **(41)** eine Kurvenbahn **(44)** aufweist, auf welcher der Nocken **(42)** unter Aufbringen der Befestigungskraft in eine Raststellung gleitet und dort gehalten wird.

5. Container- Befestigung nach Anspruch 1 oder Anspruch 3, **dadurch gekennzeichnet, dass** der Kniehebel **(41** u. **42)** am Container **(10)** gelagert ist und an seiner nockenabgewandten Seite einen Betätigungshebel **(43)** aufweist.

6. Container- Befestigung nach Anspruch 1, mit zwei Kniehebeln auf einer Containerseite, **dadurch gekennzeichnet, dass** mindestens ein Kniehebel **(41** u. **42)** einen Betätigungshebel **(43)** aufweist.
